# EUROPÄISCHE PATENTSCHRIFT

(11) **EP 4 619 655 B1**
(45) Veröffentlichungstag und Bekanntmachung des Hinweises auf die Patenterteilung: **14.10.2026**
(21) Anmeldenummer: 23825192.0
(22) Anmeldetag: 14.11.2023
(51) Int. Cl.: F16D 65/12

(54) **BREMSSCHEIBE**
BRAKE DISC
DISQUE DE FREIN

(30) Priorität: 16.11.2022 AT 508702022
(43) Veröffentlichungstag der Anmeldung: 24.09.2025
(73) Patentinhaber: Hascic, Daniel, 7011 Siegendorf (AT)
(72) Erfinder: Hascic, Daniel, 7011 Siegendorf (AT)
(74) Vertreter: Haas, Stephan
(86) Internationale Anmeldenummer: PCT/AT2023/060390
(87) Internationale Veröffentlichungsnummer: WO 2024/103094

(56) Entgegenhaltungen:
- EP-A1- 3 734 105
- DE-A1- 10 032 972
- US-A1- 2020 191 213
- US-A1- 2022 196 091

## Beschreibung

Die Erfindung betrifft eine Bremsscheibe, umfassend einen Reibring sowie ein mit dem Reibring verbundenes Halteelement, wobei der Reibring zumindest eine Ringöffnung aufweist und das Halteelement zumindest eine Halteöffnung aufweist, wobei ein Stift in der Ringöffnung und in der Halteöffnung angeordnet ist, um den Reibring mit dem Halteelement formschlüssig drehfest zu verbinden, wobei der Stift einen Halteabschnitt umfasst, der einen Durchmesser aufweist, der größer als ein Durchmesser der Halteöffnung ist, wobei ein Innendurchmesser des Reibringes kleiner ist als ein Außendurchmesser des Halteelements.

Die Erfindung betrifft weiters ein Verfahren zur Herstellung einer erfindungsgemäßen Bremsscheibe, wobei in einem ersten Schritt das Halteelement in den Reibring eingepresst wird, und anschließend in einem zweiten Schritt die zumindest eine Halteöffnung und die zumindest eine Ringöffnung hergestellt werden.

Bremsscheiben der eingangs genannten Art sind aus dem Stand der Technik bekannt und werden vor allem in Scheibenbremsen genutzt. Hierbei ist ein sich bewegendes, bspw. rotierendes Element wie ein Rad fest mit der Bremsscheibe verbunden. Um die Bremsscheibe bzw. das sich bewegende Element zu bremsen, wird zumindest eine Oberfläche der Bremsscheibe durch Bremsbeläge berührt, sodass Reibung zwischen der Bremsscheibe und dem Bremsbelag entsteht. Diese Reibung bewirkt eine Umwandlung der Bewegungsenergie in thermische Energie und damit eine Abbremsung der Bremsscheibe und damit des sich bewegenden Elements. Die Bremsbeläge sind üblicherweise auf wahlweise an die Bremsscheibe andrückbaren Bremsklötzen angeordnet.

Bremsscheiben weisen oftmals zwei miteinander verbundene Elemente auf, nämlich ein zentrales Halteelement und einen das Halteelement umgebenden Reibring, der mit den Bremsbelägen im Falle einer Bremsung in Berührung kommt. Es sind verschiedene Möglichkeiten bekannt, um den Reibring mit dem Halteelement fest zu verbinden.

Aus der DE 102019113487 A1 ist bspw. eine Bremsscheibe bekannt, die aus einem Halteelement und einem Reibring besteht. In einer Wand des Halteelements wird, bspw. mithilfe eines Stempels, eine Umformung der Wand erzeugt, sodass einerseits eine Öffnung im Halteelement und andererseits eine im Wesentlichen senkrecht von der Wand wegstehende Umformung geschaffen ist. Diese Umformung kann bspw. in eine Öffnung des Reibringes ragen, um eine formschlüssige Verbindung zwischen dem Reibring und dem Halteelement bereitzustellen. Zusätzlich kann bspw. der Stempel in den Öffnungen des Reibringes und des Halteelements angeordnet bleiben, um eine zusätzliche Befestigung bereitzustellen.

Die DE 10032972 A1 offenbart eine Verbundbremsscheibe, bei der ein Reibring und ein Bremsscheibentopf mithilfe eines in Öffnungen des Reibrings und des Bremsscheibentopfs angeordneten Verbindungselements verbunden sind. Das Verbindungselement weist einen Kopf auf und ist bspw. als Niete oder Schraube ausgebildet. Der Reibring und der Bremsscheibentopf sind bspw. mithilfe eines Press- oder Schrumpfsitzes miteinander verbunden.

Die US 2022/196091 A1 zeigt eine Bremsscheibe, bei der in der Wand des Halteelements eine Umformung der Wand erzeugt wird, die in eine Öffnung des Reibringes ragt, um die Bremsscheibe mit dem Reibring zu verbinden.

Die EP 3734105 A1 lehrt eine Bremsscheibe, die einen Reibring sowie ein Halteelement umfasst. Der Reibring weist einen umlaufenden Flansch auf, der mehrere Öffnungen hat. Das Halteelement weist entsprechende Öffnungen auf. Im montierten Zustand befinden sich die Öffnungen des Halteelements an der Außenseite und die Öffnungen des Reibringes an der Innenseite, wobei auch eine Montage, bei der sich die Öffnungen des Halteelements an der Innenseite und die Öffnungen des Reibringes an der Außenseite befinden, möglich ist. Anschließend werden Nieten in die Öffnungen geführt, um eine Verbindung herzustellen.

Die US 2020/191213 A1 beschreibt eine Scheibenbremse, umfassend einen Reibring sowie ein Halteelement. Der Reibring weist im inneren Randbereich parallel zur Drehachse verlaufende Öffnungen auf und das Halteelement weist entsprechende Öffnungen auf. Im verbundenen Zustand ist eine Niete oder ähnliches in den Öffnungen angeordnet, sodass der Reibring und das Halteelement miteinander verbunden sind.

Nachteilig bei den bekannten Bremsscheiben ist allerdings, dass die Umformungen zur Befestigung des Reibringes mit dem Halteelement erst im bereits zusammengefügten Zustand des Reibringes mit dem Halteelement ausgebildet werden können, sodass in diesem Fertigungsschritt eine aufwendige Bearbeitung des Werkstückes erfolgen muss. Darüber hinaus ist das Ausbilden der Umformung nicht ausreichend präzise, sodass die Qualität der Verbindung zwischen dem Reibring und dem Halteelement schwanken kann. Beide Bauteile unterliegen einem Teilungsfehler, der durch die Toleranzkette eine präzise Verbindung schwierig gestaltet. Dies kann nur durch eine hoch präzise und daher aufwendige Fertigung von beiden Bauteilen gestaltet werden.

Es ist daher eine Aufgabe der Erfindung, eine Bremsscheibe bereitzustellen, die eine einfache, sichere und schnell herzustellende Verbindung zwischen dem Halteelement und dem Reibring aufweist.

Erfindungsgemäß ist bei einer Bremsscheibe der eingangs genannten Art vorgesehen, dass das Verhältnis zwischen einem Innendurchmesser des Reibringes und einem Außendurchmesser des Halteelements 1:1,0002 bis 1:1,0012 beträgt. Der Stift weist hierbei einen Befestigungsabschnitt auf, der im verbundenen Zustand in einer Ringöffnung des Reibringes und einer entsprechenden Halteöffnung des Halteelements angeordnet ist, und einen Halteabschnitt, der einen größeren Durchmesser als die Halteöffnung aufweist. Der Halteabschnitt kann hierbei nicht durch die Halteöffnung geführt werden und ist nicht in der Ringöffnung bzw. der Halteöffnung angeordnet, sodass der Stift an seiner Position gehalten ist.

Bevorzugt ist vorgesehen, dass das Halteelement in den Reibring eingepresst ist. Ein Außendurchmesser des Halteelements wird hierbei gegen einen Innendurchmesser des Reibringes gepresst. Da der Innendurchmesser des Reibringes kleiner als der Außendurchmesser des Halteelements ist, wird ein Kraftschluss durch das Einpressen des Halteelements in den Reibring geschaffen, der neben dem Formschluss durch den Stift für eine feste Verbindung zwischen dem Reibring und dem Halteelement sorgt. Der Reibring ist bevorzugt im Wesentlichen ringförmig ausgebildet und das Halteelement ist bevorzugt scheibenförmig ausgebildet. Hierbei sind sowohl der Außendurchmesser des Halteelements als auch der Innendurchmesser des Reibringes im Wesentlichen entlang des Umfanges konstant, sodass eine gleichmäßige Einpressung und damit ein guter Sitz des Halteelements im Reibring ohne ungewollte Spannungsspitzen bzw. Spannungslücken gelingt.

Alternativ weist der Reibring einen, bevorzugt umlaufenden, Flansch auf, in welchem die Ringöffnungen ausgebildet sind. Hierbei kann das Halteelement von in radialer Richtung außen auf den Flansch des Reibringes aufgepresst werden. Die Halteöffnungen befinden sich hierbei ebenfalls in radialer Richtung weiter außen als die Ringöffnungen. Um einen Kraftschluss sicherzustellen, ist der Außendurchmesser des Flansches größer als ein Innendurchmesser des Halteelements.

Der Befestigungsabschnitt und der Halteabschnitt des Stifts schließen aneinander entlang der Längsachse an. Bevorzugt weisen der Befestigungsabschnitt und/oder der Halteabschnitt jeweils entlang der Längsachse im Wesentlichen den gleichen Querschnitt auf.

Der Durchmesser des Halteabschnitts ist bspw. der größtmögliche Abstand zwischen zwei Punkten des Querschnitts des Halteabschnitts.

Die Längsachse des Stifts verläuft bevorzugt im Wesentlichen in radialer Richtung. Die Längsachse des Stifts liegt also bevorzugt im Wesentlichen auf einer gedachten Geraden, die durch den Mittelpunkt des Reibringes bzw. des Halteelements verläuft. Dies ermöglicht einen guten Halt des Reibringes.

Bevorzugt weist das Halteelement mehrere Halteöffnungen auf, die besonders bevorzugt im Wesentlichen in gleichmäßigen Abständen an einer äußeren Seitenwand des Halteelements angeordnet sind. Der Reibring weist hierbei bevorzugt mehrere Ringöffnungen auf, die entsprechend den Halteöffnungen ausgebildet sind, sodass jeweils eine Halteöffnung und eine Ringöffnung einander im verbundenen Zustand gegenüberliegen. Dies erlaubt das Einführen jeweils eines Stifts in eine Halteöffnung und die zugeordnete Ringöffnung, bevorzugt in radialer Richtung. Die Verbindung der Halteöffnung und der Ringöffnung mit dem Stift erfolgt jeweils wie im Folgenden beschrieben.

Die Stifte können in axialer Richtung an jeder beliebigen Position sein. Das Halteelement kann am Innendurchmesser oder an jedem beliebigen Durchmesser mit dem Reibring mithilfe der Stifte verbunden sein.

Die Halteöffnung bzw. die Halteöffnungen sind bevorzugt rund ausgebildet, besonders bevorzugt als Bohrungen. Hierbei ist im Wesentlichen lediglich ein Durchmesser der Halteöffnung vorgesehen, der kleiner als ein Durchmesser des Halteabschnittes ist. Alternativ kann die Halteöffnung bspw. als Nut ausgebildet sein. Hierbei ist ein Durchmesser der Halteöffnung, bspw. die Breite der Nut, kleiner als ein Durchmesser des Halteabschnittes, sodass ein Gleiten des Halteelements in die Halteöffnung wirksam verhindert wird. Um im Falle der Ausbildung als Nut den Stift gegen unerwünschtes Verschieben innerhalb der Nut zu sichern, ist bevorzugt vorgesehen, dass der Stift mithilfe eines Seegerrings fixiert ist.

Die Tiefe der Halteöffnung entspricht bevorzugt im Wesentlichen der Stärke der die Halteöffnung bildenden Seitenwände des Halteelements.

Die Ringöffnung bzw. die Ringöffnungen sind bevorzugt rund ausgebildet, besonders bevorzugt als Bohrungen. Die Tiefe der Ringöffnung kann bevorzugt im Wesentlichen der Länge des Befestigungsabschnitts des Stifts entsprechen oder alternativ länger ausgebildet sein.

Der Stift bzw. die Stifte sind ebenfalls im Querschnitt bevorzugt im Wesentlichen rund ausgebildet. Insbesondere der Befestigungsabschnitt weist bevorzugt einen runden Querschnitt auf.

Das Halteelement ist in der Draufsicht bevorzugt rund ausgebildet, wobei die Halteöffnungen im Wesentlichen am Rand, insbesondere in einer umlaufenden Seitenwand, des Halteelements ausgebildet sind. Der Reibring ist ebenfalls in der Draufsicht bevorzugt rund ausgebildet. In der Mitte weist der Reibring bevorzugt eine runde Öffnung auf, in der das Halteelement angeordnet ist.

Der Stift ist bevorzugt lösbar in der Halteöffnung bzw. der Ringöffnung angeordnet, bspw. mithilfe eines Gewindes oder in Form eines Presssitzes. Alternativ kann der Stift in der Halteöffnung und/oder der Ringöffnung starr, also zerstörungsfrei unlösbar, angeordnet sein. Beispielsweise ist der Stift in die Halteöffnung bzw. die Ringöffnung eingegossen. Alternativ kann der Stift graviert sein, um ein unerwünschtes Lösen zu verhindern.

Bevorzugt ist vorgesehen, dass der Halteabschnitt im Wesentlichen an den die Halteöffnung begrenzenden Seitenwänden des Halteelements anliegt. Dadurch wird eine besonders stabile Anordnung des Stifts in der Halteöffnung und der Ringöffnung erzielt. Insbesondere wird hierdurch verhindert, dass der Stift unerwünscht weiter in die Ringöffnung bzw. den Reibring eindringt und damit die Verbindung zwischen dem Halteelement und dem Reibring geschwächt bzw. gelöst wird.

Alternativ ist bevorzugt vorgesehen, dass der Halteabschnitt des Stifts zwischen der Halteöffnung und der Ringöffnung angeordnet ist. Bevorzugt liegt der Halteabschnitt hierbei mit einer Anlagefläche auf den die Halteöffnung bildenden Seitenwänden des Halteelements auf.

Bevorzugt ist weiters vorgesehen, dass der Stift an den Halteabschnitt anschließend einen weiteren Befestigungsabschnitt aufweist. Der weitere Befestigungsabschnitt ist hierbei entlang der Längsachse des Stifts auf der dem Befestigungsabschnitt gegenüberliegenden Seite des Halteabschnitts angeordnet und weist einen geringeren Durchmesser als der Halteabschnitt auf. Bevorzugt entspricht der Durchmesser des weiteren Befestigungsabschnittes im Wesentlichen dem Durchmesser des Befestigungsabschnittes. Der weitere Befestigungsabschnitt kann, wenn der Halteabschnitt zwischen der Ringöffnung und der Halteöffnung angeordnet ist, in der Halteöffnung angeordnet sein, während der Befestigungsabschnitt in der Ringöffnung angeordnet ist. An den weiteren Befestigungsabschnitt anschließend ist bevorzugt ein weiterer Halteabschnitt vorgesehen, der bspw. an der Halteöffnung anliegt. Der weitere Halteabschnitt weist hierbei einen größeren Durchmesser als die Halteöffnung auf. Der weitere Halteabschnitt ist bevorzugt als Nietkopf ausgebildet.

Weiters ist bevorzugt vorgesehen, dass der Durchmesser der Ringöffnung kleiner ausgebildet ist als der Durchmesser der Halteöffnung. Besonders bevorzugt ist vorgesehen, dass der Durchmesser der Ringöffnung ein Verhältnis von 0,940:1 bis 0,995:1, bevorzugt von 0,950:1 bis 0,991:1 zum Durchmesser der Halteöffnung aufweist. Dies ermöglicht einen Presssitz zwischen dem Stift und der Ringöffnung, wobei der Befestigungsabschnitt des Stifts in die Halteöffnung einfach und ohne Kraftaufwand eingeführt werden kann. Der Befestigungsabschnitt des Stifts weist hierbei bevorzugt einen Außendurchmesser auf, der im Wesentlichen dem Durchmesser der Halteöffnung entspricht.

Um eine bessere Belüftung der Bremsscheibe zu ermöglichen, ist bevorzugt vorgesehen, dass der Stift als Hohlstift ausgebildet ist. Der Hohlstift erlaubt die Führung bspw. von Luft zwischen dem Halteelement und dem Reibring durch die Halteöffnung bzw. die Ringöffnung. Hierbei weist der Stift einen in Längsrichtung verlaufenden offenen Kanal auf, der sich sowohl durch den Befestigungsabschnitt als auch den Halteabschnitt erstreckt.

Bei einer bevorzugten Ausbildung ist vorgesehen, dass der Stift ein Außengewinde aufweist. Bevorzugt weist die Halteöffnung und/oder die Ringöffnung und/oder ein an die Ringöffnung anschließender Hohlraum ein Innengewinde auf, in welches der Stift eingeschraubt werden kann, um eine noch bessere Verbindung zwischen dem Reibring und dem Halteelement zu ermöglichen.

Bevorzugt ist vorgesehen, dass eine Hülse, umfassend ein Innengewinde, in der Halteöffnung, der Ringöffnung und/oder einem an die Ringöffnung anschließenden Hohlraum angeordnet ist. Die Hülse weist hierbei einen Außendurchmesser auf, der im Wesentlichen dem Durchmesser der Halteöffnung, der Ringöffnung und/oder dem an die Ringöffnung anschließenden Hohlraum entspricht und ist bspw. in Form eines Presssitzes befestigt. Die Hülse ist bevorzugt in die Ringöffnung eingegossen, um fest mit dieser verbunden zu sein. Die Hülse ist hohl ausgebildet und weist ein Innengewinde auf, in welches ein Stift mit einem entsprechenden Außengewinde eingeschraubt werden kann bzw. eingeschraubt ist, um den Stift mit der Hülse und insbesondere dem Halteelement bzw. dem Reibring zu verbinden. Weiters ist die Hülse bevorzugt im Querschnitt rund bzw. ringförmig ausgebildet.

Bevorzugt umfasst die Hülse einen Gewindeabschnitt sowie einen Hülsenabschnitt, wobei der Hülsenabschnitt einen größeren Durchmesser als der Gewindeabschnitt aufweist. Der Durchmesser des Hülsenabschnitts ist bevorzugt größer als der Durchmesser der Ringöffnung und/oder der Halteöffnung. Der Hülsenabschnitt kann das gleiche Gewinde wie der Gewindeabschnitt aufweisen. Alternativ kann der Hülsenabschnitt lediglich einen bspw. im Wesentlichen glatten inneren Kanal aufweisen, durch welchen ein Stift zum Gewindeabschnitt geführt werden kann. Besonders bevorzugt ist vorgesehen, dass der Hülsenabschnitt zwischen der Ringöffnung und der Halteöffnung angeordnet ist. Der Gewindeabschnitt ist hierbei lediglich in der Ringöffnung bzw. in einem an die Ringöffnung anschließenden Hohlraum angeordnet. Der Stift ist in dieser Ausbildung bevorzugt an der Halteöffnung anliegend ausgebildet.

Weiters ist bevorzugt vorgesehen, dass zumindest ein Abschnitt des Stiftes geriffelt ausgebildet ist. Der Stift weist hierbei im Befestigungsabschnitt eine Vielzahl von im Wesentlichen in Längsrichtung des Stifts verlaufenden Rillen bzw. Erhebungen auf. Diese Riffelung verringert die Einpresskraft, die benötigt wird, um den Stift in einen Presssitz, der durch die Halteöffnung, die Ringöffnung und/oder einen an die Ringöffnung anschließenden Hohlraum gebildet ist, einzupressen. Besonders bevorzugt erstreckt sich die Riffelung im Wesentlichen über die gesamte Länge des Befestigungsabschnittes.

Bevorzugt ist vorgesehen, dass der Stift in einem ersten Längsabschnitt einen ersten Durchmesser aufweist und in einem zweiten Längsabschnitt einen zweiten Durchmesser aufweist, wobei der erste Durchmesser größer als der zweite Durchmesser ist. Der Stift weist hierbei neben dem Halteabschnitt zwei weitere, im Befestigungsabschnitt liegende Abschnitte auf, die unterschiedliche Durchmesser aufweisen. Bevorzugt ist der erste Längsabschnitt auf der dem Halteabschnitt zugewandten Seite angeordnet und der zweite Längsabschnitt auf der dem Halteabschnitt abgewandten Seite. Hierdurch entsteht eine Stufenform des Stifts, bei welchem der Durchmesser vom Halteabschnitt beginnend abnimmt. Dies ermöglicht insbesondere eine passende Anordnung, wenn bspw. der erste Längsabschnitt in einer Halteöffnung mit einem größeren Durchmesser und der zweite Längsabschnitt in einer Ringöffnung mit einem kleineren Durchmesser angeordnet ist. Bevorzugt ist vorgesehen, dass der Durchmesser der Halteöffnung im Wesentlichen dem Durchmesser des ersten Längsabschnittes entspricht und weiters bevorzugt der Durchmesser der Ringöffnung im Wesentlichen dem Durchmesser des zweiten Längsabschnittes entspricht.

Bevorzugt ist der erste Längsabschnitt auf der dem Befestigungsabschnitt abgewandten Seite des Befestigungsabschnittes angeordnet und der zweite Längsabschnitt auf der dem Befestigungsabschnitt zugewandten Seite des Befestigungsabschnittes. Hierbei entsteht eine umlaufende Nut. In dieser Nut kann ein elastisches Element, bspw. ein elastischer Ring wie ein O-Ring angeordnet sein. Die Nut kann bspw. vom ersten Längsabschnitt und auf der anderen, dem Halteabschnitt zugewandten Seite von einem dritten Längsabschnitt begrenzt sein, der einen größeren Durchmesser als der zweite Längsabschnitt aufweist. Der Befestigungsabschnitt umfasst hierbei neben dem ersten und dem zweiten auch einen dritten Längsabschnitt. Im entspannten Zustand weist das elastische Element bevorzugt einen größeren Durchmesser als der erste Längsabschnitt auf. Diese Anordnung ermöglicht es, den Stift in die Halteöffnung und die Ringöffnung einzuschieben, wobei das elastische Element hierbei in die im Bereich des zweiten Längsabschnittes angeordnete Nut eingedrückt ist. An die Ringöffnung anschließend ist bevorzugt eine erweiterte Öffnung bzw. ein Hohlraum mit einem Durchmesser, der größer als der Durchmesser der Ringöffnung ist, vorgesehen. Nach bzw. bei Erreichen der gewünschten Lage kann sich das elastische Element in der an die Ringöffnung anschließenden Öffnung bzw. in dem Hohlraum ausdehnen und den Stift gegen unerwünschtes Verschieben sichern.

Alternativ bzw. zusätzlich kann der Befestigungsabschnitt am vom Halteabschnitt abgewandten Ende ein elastisches Teil aufweisen. Das elastische Teil ist bevorzugt ausgebildet, um im entspannten Zustand einen größeren Durchmesser als der Befestigungsabschnitt aufzuweisen. Beispielsweise kann das elastische Teil hohlzylinder- bzw. hohlkonisch ausgebildet sein. Beim Einschieben in die Halte- und die Ringöffnung wird das elastische Teil eingedrückt und nach bzw. bei Erreichen der gewünschten Lage kann sich das elastische Teil in eine an die Ringöffnung anschließende Öffnung bzw. einen Hohlraum ausdehnen und den Stift gegen unerwünschtes Verschieben sichern. Das elastische Teil kann bspw. aus einem Gummi oder einem elastischen Kunststoff bestehen und fest oder lösbar mit dem Stift verbunden sein.

Um die Verbindung zwischen dem Reibring und dem Halteelement weiter zu verbessern, ist erfindungsgemäß vorgesehen, dass das Verhältnis zwischen einem Innendurchmesser des Reibringes und einem Außendurchmesser des Halteelements 1:1,0002 bis 1:1,0012, besonders bevorzugt 1:1,0003 bis 1:1,0008 beträgt. Der Reibring kann hierbei im Zuge einer Vormontage auf das Halteelement gepresst werden, bevor die Stifte in den Ringöffnungen und den Halteöffnungen angeordnet werden.

Das Halteelement weist bevorzugt einen Mantel auf, der das Halteelement begrenzt. Der Mantel ist bevorzugt im Wesentlichen ein Zylindermantel. In dem Mantel sind bevorzugt die Halteöffnungen angeordnet.

Weiters weist der Mantel bevorzugt einen Schlitz auf, der besonders bevorzugt im Wesentlichen parallel zu einer Drehachse des Mantels bzw. des Halteelements verläuft. Bevorzugt verläuft der Schlitz über die gesamte Höhe des Mantels und trennt den Mantel in diesem Bereich durch. Dies ermöglicht ein leichtes Eindrücken des Mantels in den Schlitz im mit dem Reibring verbundenen Zustand, sodass die Toleranzen im Pressverfahren erhöht werden können. Der Schlitz weist bevorzugt eine Breite von 0,05 mm bis 0,15 mm auf. Besonders bevorzugt ist die Breite des Schlitzes über die gesamte Höhe des Mantels im Wesentlichen konstant.

Weiters ist bevorzugt vorgesehen, dass eine Anlagefläche des Stifts eine Form aufweist, die der Form der die Halteöffnung begrenzenden Seitenwände entspricht. Die Anlagefläche ist als Teil des Halteabschnitts des Stifts ausgebildet und im Wesentlichen auf der dem Befestigungsabschnitt zugewandten Seite des Halteabschnitts angeordnet. Beispielsweise ist die Anlagefläche konvex ausgebildet und die Seitenwände entsprechend konkav. Dies ermöglicht eine passgenaue Anlage des Stifts an die Halteöffnung, wodurch bspw. Kantendrücker vermieden werden.

Um das Einführen des Stiftes bzw. der Stifte in die Halteöffnungen und die Ringöffnungen zu erleichtern, weist der Stift bevorzugt eine Fase am dem Halteabschnitt abgewandten Ende des Befestigungsabschnittes auf.

Die Erfindung betrifft weiters ein Verfahren der eingangs genannten Art zur Herstellung einer erfindungsgemäßen Bremsscheibe, wobei anschließend in einem zweiten Schritt die zumindest eine Halteöffnung und die zumindest eine Ringöffnung hergestellt werden. Dies erlaubt das Ausschließen jeder Art von Teilungsfehlern, die entstehen, wenn zunächst die Öffnungen hergestellt und anschließend das Halteelement und der Reibring miteinander verbunden werden. Da das Halteelement und das Reibelement bereits in der endgültigen Position sind, können die Halteöffnungen und die Ringöffnungen exakt an der gewünschten Stelle angeordnet werden.

Insbesondere ist bevorzugt vorgesehen, dass die Halteöffnung und die entsprechende Ringöffnung im zweiten Schritt gemeinsam gebohrt werden. Hierbei werden im zweiten Schritt in einem einzigen Bohrvorgang beide Öffnungen gebohrt. Falls die Halteöffnung und die Ringöffnung unterschiedliche Durchmesser aufweisen sollen, ist bevorzugt vorgesehen, dass in einem weiteren Schritt die Halteöffnung erweitert wird, bspw. in einem weiteren Bohrvorgang mit einem Bohrer mit größerem Durchmesser.

Weiters ist der Stift bevorzugt einstückig ausgebildet.

Die Erfindung wird nachfolgend anhand eines in der Zeichnung schematisch dargestellten Ausführungsbeispiels näher erläutert. In dieser zeigt Fig. 1 eine Detailansicht einer ersten Ausführung einer erfindungsgemäßen Bremsscheibe, Fig. 2 eine Detailansicht einer zweiten Ausführung einer erfindungsgemäßen Bremsscheibe, Fig. 3 eine Detailansicht einer dritten Ausführung einer erfindungsgemäßen Bremsscheibe, Fig. 4 eine Detailansicht einer vierten Ausführung einer erfindungsgemäßen Bremsscheibe, Fig. 5 einen ersten Stift als Teil einer erfindungsgemäßen Bremsscheibe, Fig. 6 einen zweiten Stift als Teil einer erfindungsgemäßen Bremsscheibe, Fig. 7 eine Detailansicht eines Reibringes, Fig. 8 eine Detailansicht einer fünften Ausführung einer erfindungsgemäßen Bremsscheibe, Fig. 9 Detailansichten einer sechsten Ausführung einer erfindungsgemäßen Bremsscheibe, Fig. 10 eine siebte Ausführung einer erfindungsgemäßen Bremsscheibe, Fig. 11 eine erfindungsgemäße Bremsscheibe, Fig. 12 eine achte Ausführung einer erfindungsgemäßen Bremsscheibe, Fig. 13 einen dritten Stift und Fig. 14 eine neunte Ausführung einer erfindungsgemäßen Bremsscheibe.

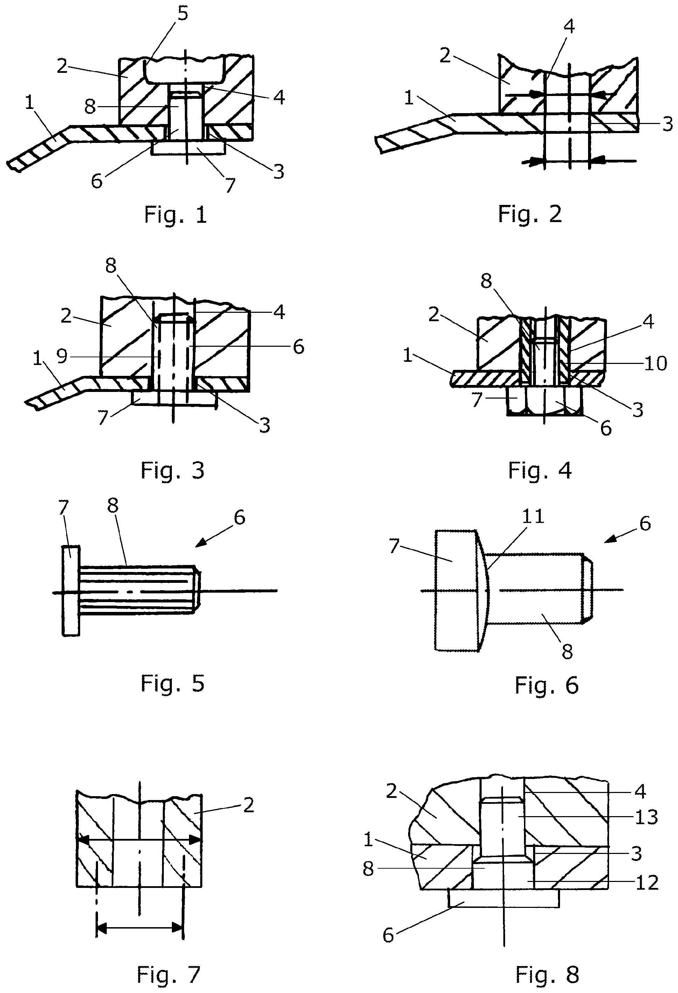

In Fig. 1 ist eine Detailansicht der Verbindung zwischen einem Halteelement 1 und einem Reibring 2 dargestellt. Das Halteelement 1 weist eine Halteöffnung 3 auf und der Reibring 2 eine Ringöffnung 4. An die Ringöffnung 4 schließt ein Hohlraum 5 an. Zur Verbindung ist ein Stift 6 vorgesehen, der einen Halteabschnitt 7 sowie einen Befestigungsabschnitt 8 aufweist. Der Befestigungsabschnitt 8 umfasst auf der dem Halteabschnitt 7 abgewandten Seite eine umlaufende Fase. Der Befestigungsabschnitt 8 ist in der Halteöffnung 3 sowie der Ringöffnung 4 angeordnet, während der Halteabschnitt 7 einen Durchmesser aufweist, der größer als der Durchmesser der Halteöffnung 3 ist. Deshalb liegt der Halteabschnitt 7 an den Seitenwänden der Halteöffnung 3 an und sichert den Stift 6 gegen ein unerwünschtes Gleiten in den Reibring 2.

In Fig. 2 ist eine Detailansicht eines Halteelements 1 und eines Reibringes 2 dargestellt, wobei der Stift 6 der Übersichtlichkeit halber nicht gezeigt ist. Bei dieser Ausführung ist der Durchmesser der Ringöffnung 4 geringfügig kleiner als der Durchmesser der Halteöffnung 3, wobei das Verhältnis ca. 23/24, also ca. 0,9583:1 beträgt.

In Fig. 3 ist eine dritte Ausführung gezeigt, bei welcher der Stift 6 als Hohlstift ausgebildet ist. Hierbei verläuft ein Kanal 9 durch den Stift 6, also sowohl durch den Befestigungsabschnitt 8 als auch den Halteabschnitt 7, sodass ein Luftaustausch zwischen dem Reibring 2 und dem Halteelement 1 und damit eine bessere Belüftung ermöglicht wird.

In Fig. 4 ist eine vierte Ausführung dargestellt, bei welcher eine Hülse 10 in der Ringöffnung 4 und der Halteöffnung 3 angeordnet ist. Die Hülse 10 weist ein Innengewinde auf und der Befestigungsabschnitt 8 des Stifts 6 ein entsprechendes Außengewinde. Durch die Verbindung zwischen dem Innengewinde der Hülse 10 und dem Außengewinde des Stifts 6 wird eine feste, lösbare Verbindung geschaffen. Die Hülse 10 weist bevorzugt einen geringfügig größeren Außendurchmesser als die Ringöffnung 4 und die Halteöffnung 3 auf, sodass die Hülse 10 in die Halteöffnung 3 und die Ringöffnung 4 eingepresst werden kann.

In Fig. 5 ist ein Stift 6 dargestellt, bei welchem der Befestigungsabschnitt 8 in Längsrichtung geriffelt ausgebildet ist. Dies reduziert die Einpresskräfte, die zur Befestigung des Stifts 6 in der Halteöffnung 3 und der Ringöffnung 4 nötig sind.

In Fig. 6 ist ein Stift 6 dargestellt, bei welchem eine Anlagefläche 11 des Halteabschnitts 7 des Stifts 6 eine konvexe Krümmung aufweist. Falls die die Halteöffnung 3 begrenzenden Seitenwände des Halteelements 1 eine entsprechend ausgebildete konkave Krümmung aufweisen, kann der Halteabschnitt 7 des Stifts 6 vollflächig aufliegen und Kantendrücker werden in diesem Bereich vermieden.

In Fig. 7 ist gezeigt, dass die Position der Stifte 6 über die Höhe des Reibringes 3 erfolgen kann. Dadurch sind eventuelle Probleme bei der Belüftung der Bremsscheibe ausgeschlossen.

In Fig. 8 ist eine Ausführung einer erfindungsgemäßen Bremsscheibe dargestellt, bei der die Halteöffnung 3 einen kleineren Durchmesser als die Ringöffnung 4 aufweist. Weiters weist auch der Stift 6 im Befestigungsabschnitt 8 in Längsrichtung einen ersten Längsabschnitt 12 und einen zweiten Längsabschnitt 13 auf, wobei der Durchmesser des ersten Längsabschnitts 12 größer als der Durchmesser des zweiten Längsabschnittes 13 ist. Der Durchmesser des ersten Längsabschnittes 12 entspricht im Wesentlichen dem Durchmesser der Halteöffnung 3 und der Durchmesser des zweiten Längsabschnittes 13 entspricht im Wesentlichen dem Durchmesser der Ringöffnung 4. Hierdurch ist ein guter Halt des Stifts 6 in der Halteöffnung 3 sowie der Ringöffnung 4 gewährleistet.

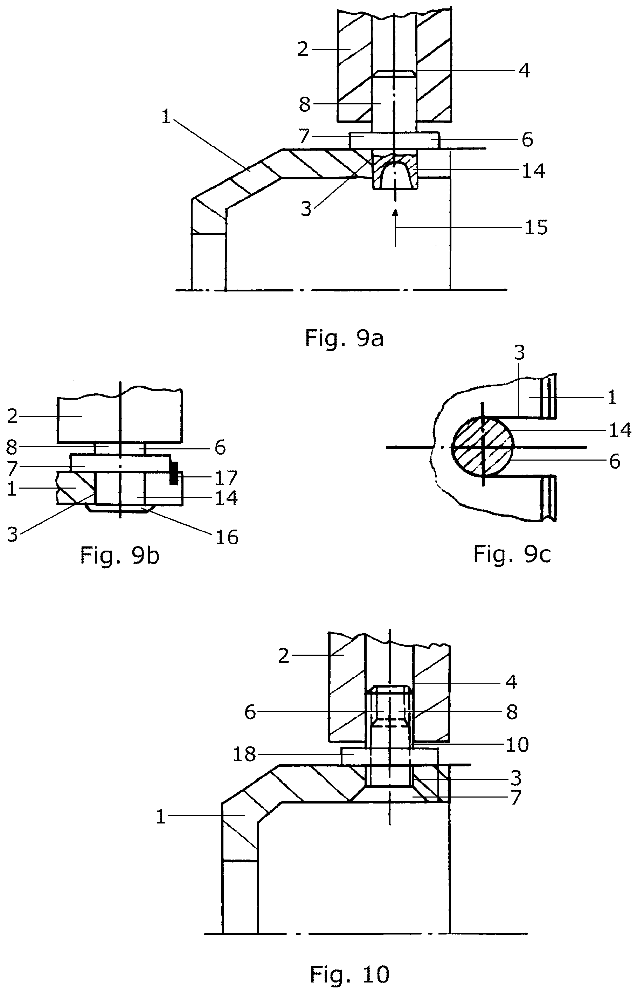

In Fig. 9 ist eine weitere Ausführungsform einer erfindungsgemäßen Bremsscheibe dargestellt, wobei in Fig. 9a eine Schnittdarstellung vor der endgültigen Verbindung zwischen der Reibscheibe 2 und dem Halteelement 1, in Fig. 9b eine Detailansicht der Verbindung zwischen der Reibscheibe 2 und dem Halteelement 1 und in Fig. 9c eine Draufsicht auf die Halteöffnung 3 gezeigt sind. Bei dieser Ausführung ist der Befestigungsabschnitt 8 des Stifts 6 fest innerhalb der Ringöffnung 4 angeordnet, bspw. in die Ringöffnung 4 eingegossen. Der Halteabschnitt 7 des Stifts 6 ist hierbei zwischen der Halteöffnung 3 und der Ringöffnung 4 angeordnet und liegt auf den die Halteöffnung 3 bildenden Seitenwänden des Halteelements 1 auf. Weiters ist die Halteöffnung 4 als Nut ausgebildet. An den Halteabschnitt 7 anschließend weist der Stift 6 einen weiteren Befestigungsabschnitt 14 auf, der in der Halteöffnung 3 angeordnet ist und über diesen hinaus in das Halteelement 1 ragt. Der Befestigungsabschnitt 14 ist als Niete ausgebildet, sodass durch eine Kraftausübung auf den Befestigungsabschnitt 14 in Richtung des Pfeils 15 ein als Nietkopf ausgebildeter weiterer Halteabschnitt 16 (Fig. 9b) geformt wird. In Fig. 9b ist die Verbindung dargestellt, die neben dem weiteren Halteabschnitt 16 einen Seegerring 17 umfasst, der ausgebildet ist, um den Stift 6 gegen seitliches Verschieben innerhalb der als Nut ausgebildeten Halteöffnung zu sichern. In Fig. 9c ist in einer Draufsicht insbesondere die als Nut ausgebildete Halteöffnung 3 gezeigt.

In Fig. 10 ist eine Detailansicht einer weiteren erfindungsgemäßen Bremsscheibe dargestellt. Hierbei ist eine Hülse 10 fest in der Ringöffnung 4 angeordnet, bspw. eingegossen. Die Hülse 10 weist einen Hülsenabschnitt 18 auf, der einen größeren Durchmesser als die Ringöffnung 4 und die Halteöffnung 3 aufweist. Um den Reibring 2 mit dem Halteelement 1 zu verbinden, wird der Stift 6 mit einem Außengewinde in das Innengewinde der Hülse 10 eingeschraubt. Die Längsachsen der Stifte 6 verlaufen jeweils in radialer Richtung.

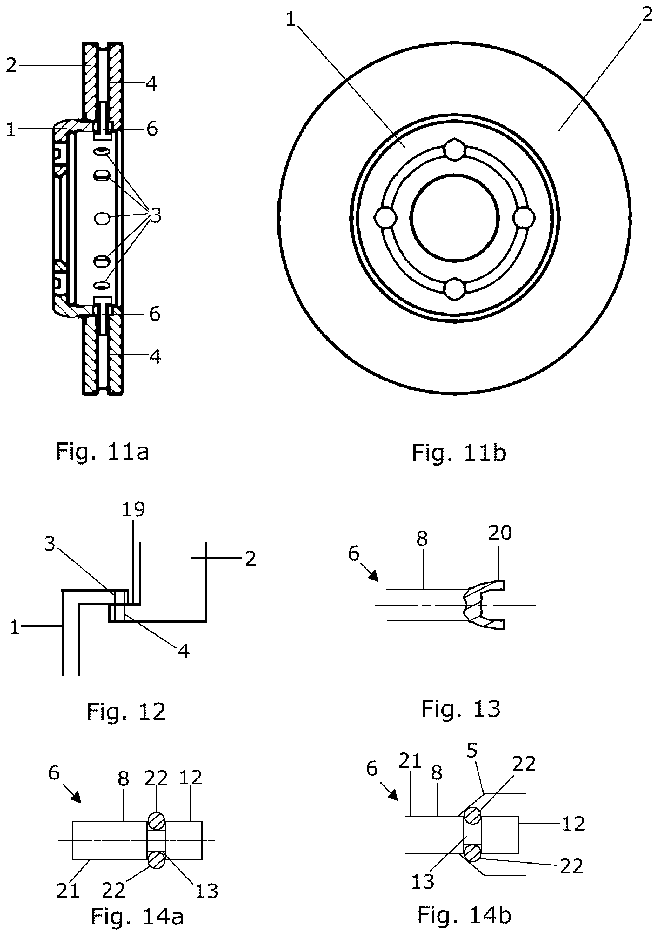

In Fig. 11 ist eine erfindungsgemäße Bremsscheibe in einer Schnittansicht (Fig. 11a) und einer Ansicht von der Seite (Fig. 11b) dargestellt. Die Halteöffnungen 3 sind in regelmäßigen Abständen im runden Halteelement 1 angeordnet und liegen jeweils einer im ringförmigen Reibelement 2 angeordneten Ringöffnung 4 gegenüber, sodass das Halteelement 1 und der Reibring 2 mithilfe der Stifte 6 wie in den Fig. 1 bis 10 dargestellt miteinander verbunden werden können. Weiters ist ein Innendurchmesser des Reibringes 2 kleiner als ein Außendurchmesser des Halteelements 1. Dies ermöglicht, zusammen mit der Verbindung mithilfe der Stifte, einen festen Sitz des Reibringes 2 auf dem Halteelement 1.

In Fig. 12 eine achte Ausführung einer erfindungsgemäßen Bremsscheibe dargestellt. Im Unterschied zur Ausführung gemäß Fig. 11 ist das Halteelement 1 von außen auf einen Flansch 19 des Reibringes 2 aufgepresst, wobei der Außendurchmesser des Flansches 19 größer ist als ein entsprechender Innendurchmesser des Halteelements 1. Die Ringöffnungen 4 sind im Flansch 19 angeordnet.

In Fig. 13 ist ein dritter Stift 6 gezeigt. Im Anschluss an den Befestigungsabschnitt 8 weist der Stift 6 ein elastisches Teil 20 auf, das hohlkonisch ausgebildet ist. Beim Führen des Stifts 6 durch die Ringöffnung 4 und die Halteöffnung 3 kann das elastische Teil 20 zusammengedrückt werden und nach Erreichen der gewünschten Lage wieder auseinandergedrückt werden. Der Halteabschnitt 7 der Stifts 6 ist in dieser Ansicht nicht dargestellt.

In Fig. 14 ist eine neunte Ausführung einer erfindungsgemäßen Bremsscheibe dargestellt. In Fig. 14a ist ein Stift 6 gezeigt, der einen Befestigungsabschnitt 8, umfassend einen ersten Längsabschnitt 12 sowie einen zweiten Längsabschnitt 13, aufweist. Der Halteabschnitt 7 ist nicht gezeigt. Der zweite Längsabschnitt 13 ist zwischen dem (nicht gezeigten) Halteabschnitt 7 und dem ersten Längsabschnitt 12 angeordnet und weist einen geringeren Durchmesser als der erste Längsabschnitt 12 auf. Zusammen mit dem dritten Längsabschnitt 21, der auf der dem Befestigungsabschnitt 8 zugewandten Seite des zweiten Längsabschnittes 13 angeordnet ist, wird im Bereich des zweiten Längsabschnittes 13 eine Nut begrenzt. In dieser entstehenden Nut ist ein elastisches Element 22 angeordnet, das bspw. als umlaufender elastischer Ring ausgebildet ist. In Fig. 14b ist der Stift 6 in der befestigten Lage dargestellt. Nach der Ringöffnung 4 ist ein Hohlraum 5 angeordnet, in dem sich das elastische Element 21 ausdehnen kann, um den Stift 6 gegen unerwünschtes Verschieben zu sichern.

## Patentansprüche

1. Bremsscheibe, umfassend einen Reibring (2) sowie ein mit dem Reibring (2) verbundenes Halteelement (1), wobei der Reibring (2) zumindest eine Ringöffnung (4) aufweist und das Halteelement (1) zumindest eine Halteöffnung (3) aufweist, wobei ein Stift (6) in der Ringöffnung (4) und in der Halteöffnung (3) angeordnet ist, um den Reibring (2) mit dem Halteelement (1) formschlüssig drehfest zu verbinden, wobei der Stift (6) einen Halteabschnitt (7) umfasst, der einen Durchmesser aufweist, der größer als ein Durchmesser der Halteöffnung (3) ist, wobei ein Innendurchmesser des Reibringes (2) kleiner ist als ein Außendurchmesser des Halteelements (1), **dadurch gekennzeichnet, dass** das Verhältnis zwischen einem Innendurchmesser des Reibringes (2) und einem Außendurchmesser des Halteelements (1) 1:1,0002 bis 1:1,0012 beträgt.

2. Bremsscheibe nach Anspruch 1, **dadurch gekennzeichnet, dass** der Reibring (2) einen Flansch (19) aufweist, in welchem die Ringöffnungen (4) ausgebildet sind.

3. Bremsscheibe nach Anspruch 1 oder 2, **dadurch gekennzeichnet, dass** der Halteabschnitt (7) im Wesentlichen an den die Halteöffnung (3) begrenzenden Seitenwänden des Halteelements (1) anliegt.

4. Bremsscheibe nach Anspruch 1, 2 oder 3, **dadurch gekennzeichnet, dass** der Durchmesser der Ringöffnung (4) kleiner ausgebildet ist als der Durchmesser der Halteöffnung (3).

5. Bremsscheibe nach Anspruch 4, **dadurch gekennzeichnet, dass** der Durchmesser der Ringöffnung (4) und der Durchmesser der Halteöffnung (3) ein Verhältnis von 0,940:1 bis 0,995:1, bevorzugt von 0,950:1 bis 0,991:1 aufweisen.

6. Bremsscheibe nach einem der Ansprüche 1 bis 5, **dadurch gekennzeichnet, dass** der Stift (6) als Hohlstift ausgebildet ist.

7. Bremsscheibe nach einem der Ansprüche 1 bis 6, **dadurch gekennzeichnet, dass** der Stift (6) ein Außengewinde aufweist.

8. Bremsscheibe nach einem der Ansprüche 1 bis 7, **dadurch gekennzeichnet, dass** zumindest ein Abschnitt des Stiftes (6) geriffelt ausgebildet ist.

9. Bremsscheibe nach einem der Ansprüche 1 bis 8, **dadurch gekennzeichnet, dass** der Stift (6) in einem ersten Längsabschnitt (12) einen ersten Durchmesser aufweist und in einem zweiten Längsabschnitt (13) einen zweiten Durchmesser aufweist, wobei der erste Durchmesser größer als der zweite Durchmesser ist.

10. Bremsscheibe nach Anspruch 9, **dadurch gekennzeichnet, dass** der erste Längsabschnitt (12) auf der dem Befestigungsabschnitt (7) abgewandten Seite angeordnet und der zweite Längsabschnitt (13) auf der dem Befestigungsabschnitt (7) zugewandten Seite, sodass eine umlaufende Nut gebildet ist, wobei in dieser Nut ein elastisches Element (21) angeordnet ist.

11. Bremsscheibe nach einem der Ansprüche 1 bis 10, **dadurch gekennzeichnet, dass** der Befestigungsabschnitt (8) am vom Halteabschnitt (7) abgewandten Ende ein elastisches Teil aufweist.

12. Bremsscheibe nach einem der Ansprüche 1 bis 11, **dadurch gekennzeichnet, dass** das Halteelement (1) einen Mantel aufweist, der das Halteelement (1) begrenzt, wobei der Mantel einen Schlitz aufweist.

13. Verfahren zur Herstellung einer Bremsscheibe nach einem der Ansprüche 1 bis 12, wobei in einem ersten Schritt das Halteelement (1) in den Reibring (2) eingepresst wird, und anschließend in einem zweiten Schritt die zumindest eine Halteöffnung (3) und die zumindest eine Ringöffnung (4) hergestellt werden, **dadurch gekennzeichnet, dass** das Verhältnis zwischen einem Innendurchmesser des Reibringes (2) und einem Außendurchmesser des Halteelements (1) 1:1,0002 bis 1:1,0012 beträgt.

## Claims

1. A brake disc comprising a friction ring (2) and a retaining element (1) connected to the friction ring (2), wherein the friction ring (2) has at least one ring opening (4) and the retaining element (1) has at least one retaining opening (3), wherein a pin (6) is arranged in the ring opening (4) and in the retaining opening (3) in order to positively and rotationally connect the friction ring (2) to the retaining element (1), wherein the pin (6) comprises a retaining portion (7) having a diameter that is larger than a diameter of the retaining opening (3), wherein an inner diameter of the friction ring (2) is smaller than an outer diameter of the retaining element (1), **characterized in that** the ratio between an inner diameter of the friction ring (2) and an outer diameter of the retaining element (1) is 1:1.0002 to 1:1.0012.

2. The brake disc according to claim 1, **characterized in that** the friction ring (2) has a flange (19) in which the ring openings (4) are formed.

3. The brake disc according to claim 1 or 2, **characterized in that** the retaining portion (7) lies essentially against the side walls of the retaining element (1) delimiting the retaining opening (3).

4. The brake disc according to claim 1, 2 or 3, **characterized in that** the diameter of the ring opening (4) is smaller than the diameter of the retaining opening (3).

5. The brake disc according to claim 4, **characterized in that** the diameter of the ring opening (4) and the diameter of the retaining opening (3) have a ratio of 0.940:1 to 0.995:1, preferably 0.950:1 to 0.991:1.

6. The brake disc according to one of claims 1 to 5, **characterized in that** the pin (6) is designed as a hollow pin.

7. The brake disc according to one of claims 1 to 6, **characterized in that** the pin (6) has an external thread.

8. The brake disc according to one of claims 1 to 7, **characterized in that** at least a portion of the pin (6) is grooved.

9. The brake disc according to one of claims 1 to 8, **characterized in that** the pin (6) has a first diameter in a first longitudinal portion (12) and a second diameter in a second longitudinal portion (13), the first diameter being larger than the second diameter.

10. The brake disc according to claim 9, **characterized in that** the first longitudinal portion (12) is arranged on the side facing away from the fastening portion (7) and the second longitudinal portion (13) is arranged on the side facing the retaining portion (7), so that a circumferential groove is formed, an elastic element (21) being arranged in this groove.

11. The brake disc according to one of claims 1 to 10, **characterized in that** the fastening portion (8) has an elastic part at the end facing away from the retaining portion (7).

12. The brake disc according to one of claims 1 to 11, **characterized in that** the retaining element (1) has a casing that delimits the retaining element (1), wherein the casing has a slot.

13. A method for producing a brake disc according to one of claims 1 to 12, wherein in a first step the retaining element (1) is pressed into the friction ring (2), and in a second step at least one retaining opening (3) and at least one ring opening (4) are produced, **characterized in that** the ratio between an inner diameter of the friction ring (2) and an outer diameter of the retaining element (1) is 1:1.0002 to 1:1.0012.

## Revendications

1. Disque de frein, comprenant une bague de friction (2) ainsi qu'un élément de retenue (1), relié avec la bague de friction (2), la bague de friction (2) comprenant au moins un orifice de bague (4) et l'élément de retenue (1) présentant au moins un orifice de retenue (3), une goupille (6) étant disposée dans l'orifice de bague (4) et dans l'orifice de retenue (3), pour relier par complémentarité de forme, de manière solidaire en rotation la bague de friction (2) avec l'élément de retenue (1), la goupille (6) comprenant un segment de retenue (7) qui présente un diamètre qui est supérieur à un diamètre de l'orifice de retenue (3), un diamètre intérieur de la bague de friction (2) étant inférieur à un diamètre extérieur de l'élément de retenue (1), **caractérisé en ce que** le rapport entre un diamètre intérieur de la bague de friction (2) et un diamètre extérieur de l'élément de retenue (1) est de 1:1,0002 à 1:1,0012.

2. Disque de frein selon la revendication 1, **caractérisé en ce que** la bague de friction (2) présente une bride (19) dans laquelle sont conçus les orifices de bague (4).

3. Disque de frein selon la revendication 1 ou 2, **caractérisé en ce que** le segment de retenue (7) est sensiblement en appui sur les parois latérales de l'élément de retenue (1) délimitant l'orifice de retenue (3).

4. Disque de frein selon la revendication 1, 2 ou 3, **caractérisé en ce que** le diamètre de l'orifice de bague (4) est conçu de sorte à être inférieur au diamètre de l'orifice de retenue (3).

5. Disque de frein selon la revendication 4, **caractérisé en ce que** le diamètre de l'orifice de bague (4) et le diamètre de l'orifice de retenue (3) présentent un rapport de 0,940:1 à 0,995:1, de manière préférentielle, de 0,950:1 à 0,991:1.

6. Disque de frein selon l'une quelconque des revendications 1 à 5, **caractérisé en ce que** la goupille (6) est conçue sous la forme d'une goupille creuse.

7. Disque de frein selon l'une quelconque des revendications 1 à 6, **caractérisé en ce que** la goupille (6) présente un filetage.

8. Disque de frein selon l'une quelconque des revendications 1 à 7, **caractérisé en ce qu'**au moins un segment de la goupille (6) est conçu en étant cannelé.

9. Disque de frein selon l'une quelconque des revendications 1 à 8, **caractérisé en ce que** dans un premier segment longitudinal (12), la goupille (6) présente un premier diamètre et dans un deuxième segment longitudinal (13), présente un deuxième diamètre, le premier diamètre étant supérieur au deuxième diamètre.

10. Disque de frein selon la revendication 9, **caractérisé en ce que** le premier segment longitudinal (12) est placé sur la face détournée du segment de fixation (7) et le deuxième segment longitudinal (13) est placé sur la face tournée vers le segment de fixation (7), de sorte à constituer une rainure périphérique, dans cette rainure étant placé un élément (21) élastique.

11. Disque de frein selon l'une quelconque des revendications 1 à 10, **caractérisé en ce que** le segment de fixation (8) présente une partie élastique sur l'extrémité détournée du segment de retenue (7).

12. Disque de frein selon l'une quelconque des revendications 1 à 11, **caractérisé en ce que** l'élément de retenue (1) présente une enveloppe qui délimite l'élément de retenue (1), l'enveloppe présentant une fente.

13. Procédé, destiné à fabriquer un disque de frein selon l'une quelconque des revendications 1 à 12, dans une première étape, l'élément de retenue (1) étant emmanché dans la bague de friction (2) et par la suite, dans une deuxième étape, l'au moins un orifice de retenue (3) et l'au moins un orifice de bague (4) étant fabriqués, **caractérisé en ce que** le rapport entre un diamètre intérieur de la bague de friction (2) et un diamètre extérieur de l'élément de retenue (1) est de 1:1,0002 à 1:1,0012.
